# EUROPEAN PATENT APPLICATION

(11) **EP 4 283 767 A2**
(43) Date of publication of application: **29.11.2023**
(21) Application number: 23163732.3
(22) Date of filing: 23.03.2023
(51) Int. Cl.: H01M 50/211, H01M 50/289, H01M 50/548

(54) **ELECTRIC POWER STORAGE DEVICE**

(30) Priority: 23.05.2022 JP 2022083809
(71) Applicant: TOYOTA JIDOSHA KABUSHIKI KAISHA, Aichi-Ken 471-8571 (JP)
(72) Inventor: NAKAYAMA, Hiroyuki, Toyota-shi, 471-8571 (JP)
(74) Representative: D Young & Co LLP

(57) **Abstract**

An electric power storage device (1) includes multiple cells (10), and multiple spacers (20), each of the spacers (20) being disposed between cells that are adjacent. Each of the cells (10) includes an outer encasement member (16) accommodating an electrolytic solution inside, and a first terminal portion (11) and a second terminal portion (12). The first terminal portions (11) and the second terminal portions (12) are disposed arrayed alternating in each of a first protruding direction and a second protruding direction, protruding from the outer encasement member as viewed from above. Each of the spacers (20) includes a first end portion (21) that protrudes further outward than an end portion of the outer encasement member (16) in the first protruding direction, and a second end portion (22) that protrudes further outward than the end portion of the outer encasement member in the second protruding direction, and each of the first end portion (21) and the second end portion (22) is provided with an extending portion (23).

## Description

### BACKGROUND OF THE INVENTION

### 1. Field of the Invention

The present disclosure relates to an electric power storage device.

### 2. Description of Related Art

In recent years, various types of electric power storage devices, used as electric power supplies for battery electric vehicles and hybrid electric vehicles, have been developed.

Japanese Unexamined Patent Application Publication No. 2013-229266 (JP 2013-229266 A) discloses a battery module serving as an electric power storage device. The battery module includes multiple batteries that are flat and are stacked in an up-down direction. Rectangular laminated-type batteries, having an electrode body in which an anode, a cathode, and a separator are laminated, and sealed by a laminate film, are used as the batteries.

In such a laminated-type battery, electrode tabs (terminal portions) each made of a thin metal plate are led out from the middle of both end portions, which are short sides, in a strip form from the laminate film serving as an outer encasement. The batteries are stacked in alternating orientations such that the electrode tabs on the anode side and the electrode tabs on the cathode side alternate. The batteries are connected in series as a whole, by connecting electrode tabs on the anode side and electrode tabs on the cathode side alternating, adjacent to each other on one side and the other side in a longitudinal side direction.

### SUMMARY OF THE INVENTION

In the electric power storage device disclosed in JP 2013-229266 A, when an outer encasement is partially damaged, an electrolytic solution leaks out from within the outer encasement. In such a situation, when no measures are taken, the leaked electrolytic solution flows downward along an outer peripheral face of the outer encasement of the batteries that are stacked together. At this time, there are cases in which the electrode tabs on the anode side and the electrode tabs on the cathode side, which are arrayed in the up-down direction but are not directly connected to each other, come to be electrically connected via the electrolytic solution. This can lead to short-circuiting of the electric power storage device.

The present disclosure provides an electric power storage device in which occurrence of short-circuiting can be suppressed, even when the electrolytic solution leaks out from any of multiple cells that are stacked together.

An electric power storage device according to the present disclosure includes: multiple cells that are arrayed in an up-down direction, and multiple spacers that are stacked alternating with the cells in the up-down direction, each of the spacers being disposed between cells that are adjacent in the up-down direction. Each of the cells includes an outer encasement member accommodating an electrolytic solution inside, and a first terminal portion and a second terminal portion protruding from the outer encasement member. The first terminal portion and the second terminal portion protrude from the outer encasement member in a first protruding direction and in a second protruding direction that is different from the first protruding direction, respectively, and the first terminal portion and the second terminal portion are disposed arrayed alternating in the up-down direction, as viewed from above. Each of the spacers includes a first end portion that protrudes further outward than an end portion of the outer encasement member in the first protruding direction, and a second end portion that protrudes outward than an end portion of the outer encasement member in the second protruding direction. Each of the first end portion and the second end portion is provided with an extending portion heading to one side in the up-down direction.

According to the above configuration, when the outer encasement member of a cell on the upper side among cells that are adjacent is damaged and electrolytic solution leaks out, the electrolytic solution runs along an outer peripheral face of the outer encasement member, and reaches an upper face of the spacer. The electrolytic solution that has reached the upper face of the spacer heads toward the extending portion provided at the first end portion of the spacer, and/or the extending portion provided at the second end portion thereof. When the extending portion heads upward, the electrolytic solution can be retained inside the extending portion. When the extending portion heads downward, the first end portion and the second end portion protrude further outward than the outer encasement member of the cell on the lower side among the cells that are adjacent, and accordingly the electrolytic solution heading toward the extending portions drips downward from the extending portions, without running along the side face of the outer encasement member of the cell on the lower side. At this time, a flow path of the leaked electrolytic solution is cut off. Thus, the first terminal portion and the second terminal portion of cells that are adjacent can be suppressed from being electrically connected via the electrolytic solution at an unintended location. As a result, occurrence of short-circuiting in the electric power storage device can be suppressed.

In the electric power storage device according to the present disclosure, the extending portion may extend toward the lower side.

According to the above configuration, the electrolytic solution leaking from the outer encasement member of the cell situated upward from the spacer can be made to drip downward from the lower end of the extending portion, without running along the side face of the outer encasement member of the cell on the lower side.

In the electric power storage device according to the present disclosure, the extending portion may extend toward the upward side.

According to the above configuration, the electrolytic solution leaking from the outer encasement member of the cell situated upward from the spacer can be retained within the extending portion.

In the electric power storage device according to the present disclosure, the spacers preferably exhibit electrolytic solution withstanding properties.

Accordingly, when the electrolytic solution leaks out from the cell, corrosion of the spacer by the electrolytic solution can be suppressed.

The electric power storage device according to the present disclosure may further include a housing case that includes a bottom portion and houses the cells and the spacers, and a bottom-side spacer disposed between a cell situated lowermost, and the bottom portion. In this case, the bottom-side spacer may include a first protruding end portion that protrudes further outward than the end portion of the outer encasement member in the first protruding direction, and a second protruding end portion that protrudes further outward than the end portion of the outer encasement member in the second protruding direction. Also, each of the first protruding end portion and the second protruding end portion may include an extending portion heading upward.

According to the above configuration, when the outer encasement member of the cell on the upper side is damaged, and the electrolytic solution has fallen from the extending portions of the spacer toward the bottom portion, the electrolytic solution can be blocked by the extending portions provided to the first protruding end portion of the bottom-side spacer and the second protruding end portion thereof. Also, the height positions of the first terminal portion of the cell situated lowermost and the second terminal portion thereof can be increased by an amount equivalent to the thickness of the bottom-side spacer. Thus, the cell situated lowermost can be suppressed from being affected by the electrolytic solution that has fallen to the bottom portion.

The electric power storage device according to the present disclosure may further include a plurality of connecting portions, each of the connecting portions electrically connecting the first terminal portion and the second terminal portion of the cells that are adjacent such that the cells are connected in series. In this case, the first protruding direction may be a direction facing one side of a lateral direction orthogonal to the up-down direction, and the second protruding direction may be a direction facing another side in the lateral direction. Also, one end portion of the first end portion and the second end portion of each of the spacers may face one of the connecting portions in the lateral direction. Further, another end portion of the first end portion and the second end portion of each of the spacers may protrude outward in the lateral direction from the first terminal portion and the second terminal portion that are arrayed alternating in the up-down direction as viewed from above.

According to the above configuration, on the side where the first terminal portion and the second terminal portion are not connected by the connecting portion in the up-down direction, the end portions of the spacer in the lateral direction is laterally situated further on the outer side of the first terminal portion and the second terminal portion that are arrayed in the up-down direction. Thus, when the electrolytic solution leaks from the cell on the upper side among the cells that are adjacent, the electrolytic solution can be guided further on the outer side than the first terminal portion and the second terminal portion arrayed in the up-down direction, at the side at which the first terminal portion and the second terminal portion are not connected to each other by the connecting portion in the up-down direction.

The electric power storage device according to the present disclosure may further include a housing case that includes a bottom portion and houses the cells and the spacers. In this case, the bottom portion may be provided with a retention portion that retains the electrolytic solution leaking out from at least one of the cells.

According to the above configuration, when the outer encasement member of the cell on the upper side is damaged, and the electrolytic solution has fallen from the extending portion of the spacer toward the bottom portion, the electrolytic solution can be retained in the retention portion. Accordingly, the electrolytic solution that has fallen to the bottom portion can be suppressed from freely moving.

According to the present disclosure an electric power storage device in which occurrence of short-circuiting can be suppressed, even when the electrolytic solution leaks out from any of the cells that are stacked together, can be provided.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a top view illustrating an electric power storage device according to a first embodiment;
FIG. 2 is a sectional view illustrating the electric power storage device according to the first embodiment;
FIG. 3 is a sectional view illustrating an example of a case in which an electrolytic solution is leaking from a cell in the electric power storage device according to the first embodiment;
FIG. 4 is a sectional view illustrating an example of a case in which an electrolytic solution is leaking from a cell in an electric power storage device according to a comparative example;
FIG. 5 is a sectional view illustrating an electric power storage device according to a second embodiment;
FIG. 6 is a sectional view illustrating an electric power storage device according to a third embodiment;
FIG. 7 is a sectional view illustrating an electric power storage device according to a fourth embodiment; and
FIG. 8 is a sectional view illustrating an electric power storage device according to a fifth embodiment.

### DETAILED DESCRIPTION OF EMBODIMENTS

Embodiments of the present disclosure will be described in detail below with reference to the drawings. In the embodiment shown below, the same or common parts are denoted by the same reference signs in the drawings, and the description thereof will not be repeated.

### First Embodiment

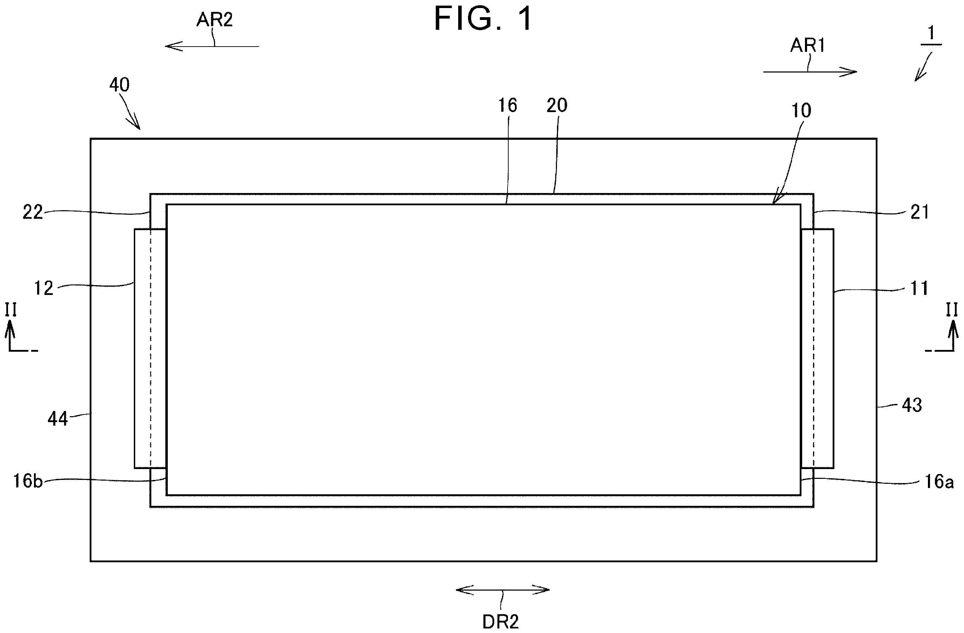

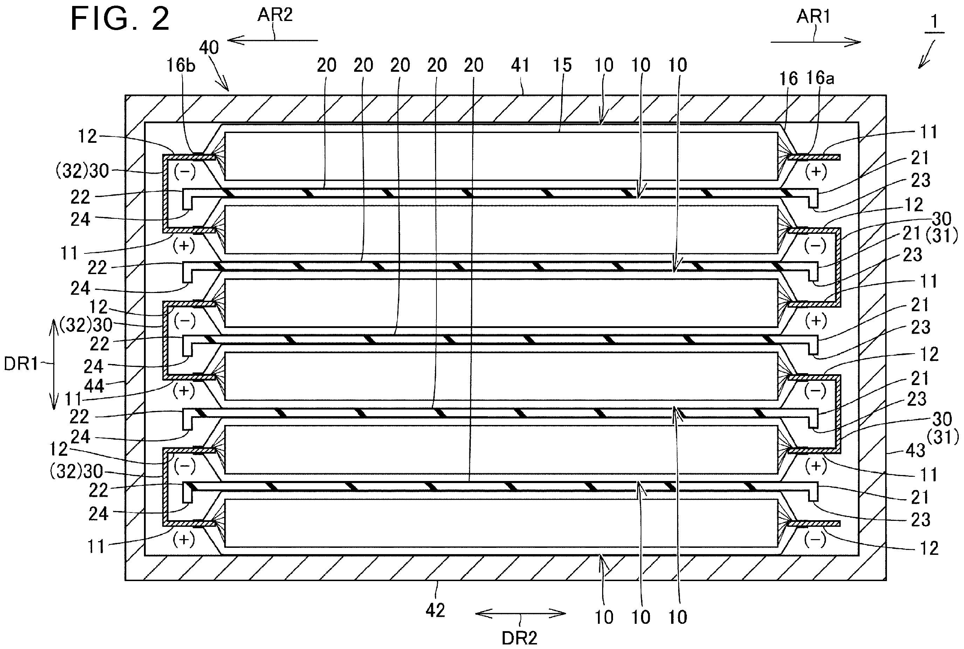

FIG. 1 is a top view illustrating an electric power storage device according to a first embodiment. FIG. 2 is a sectional view illustrating the electric power storage device according to the first embodiment. Note that in FIG. 1, a top portion of a housing case is omitted from illustration for the sake of convenience. Also, FIG. 2 is a sectional view taken along line II-II in FIG. 1. The electric power storage device 1 according to the first embodiment will be described with reference to FIGS. 1 and 2.

The electric power storage device according to the first embodiment is installed in a vehicle such as a hybrid electric vehicle capable of traveling using motive power of at least one of an electric motor and an engine, or an electrified vehicle that travels under driving force obtained from electrical energy.

The electric power storage device 1 includes a plurality of cells 10, a plurality of spacers 20, a plurality of connecting portions 30, and a housing case 40.

The housing case 40 has a substantially box-like shape, and houses therein the cells 10, the spacers 20, and the connecting portions 30. The housing case 40 includes a top portion 41 and a bottom portion 42 facing each other in an up-down direction (DR1 direction), and a peripheral wall portion connecting peripheral edges of the top portion 41 and the bottom portion 42. The peripheral wall portion has side wall portions 43, 44 facing each other in a lateral direction (DR2 direction) orthogonal to the up-down direction.

The cells 10 are arrayed in the up-down direction. Examples of the cells 10 include lithium-ion batteries. The cells 10 are so-called laminated cells.

The cell 10 includes an electrode laminate 15, an outer encasement member 16, an anode current collector plate 11 serving as a first terminal portion, and a cathode current collector plate 12 serving as a second terminal portion.

The electrode laminate 15 includes, for example, a plurality of anode sheets, a plurality of separators, and a plurality of cathode sheets. The separators are disposed between the anode sheets and the cathode sheets.

The anode sheet includes aluminum foil, and an anode composite material layer formed on front and rear faces of the aluminum foil. An uncoated portion, where the anode composite material layer is not formed, is formed on the aluminum foil.

The cathode sheet includes copper foil, and a cathode composite material layer formed on front and rear faces of the copper foil. An uncoated portion, where the cathode composite material layer is not formed, is formed on the copper foil.

The outer encasement member 16 accommodates the electrode laminate 15 and an electrolytic solution therein. The outer encasement member 16 is made of, for example, a laminate film. The laminate film covers part of the anode current collector plate 11, part of the cathode current collector plate 12, and the electrode laminate 15.

The anode current collector plate 11 protrudes outside from the outer encasement member 16. The anode current collector plate 11 is connected to the uncoated portion of the anode sheet. The anode current collector plate 11 has a flat plate-like form. The anode current collector plate 11 is made of, for example, aluminum, or an alloy containing aluminum as a principal component.

The cathode current collector plate 12 protrudes outside from the outer encasement member 16. The cathode current collector plate 12 is connected to the uncoated portion of the cathode sheet. The cathode current collector plate 12 has a flat plate-like form. The cathode current collector plate 12 is made of, for example, copper, or an alloy containing copper as a principal component.

As viewed from above, the cells 10 are arrayed in the up-down direction so that the anode current collector plates 11 and the cathode current collector plates 12 are arrayed alternating in the up-down direction in each of a first protruding direction (AR1 direction) that is a direction protruding from the outer encasement members 16, and a second protruding direction (AR2 direction) that is a direction different from the first protruding direction.

The connecting portions 30 each electrically connect the anode current collector plate 11 and the cathode current collector plate 12 of cells 10 that are adjacent so that the cells 10 are connected in series. The connecting portions 30 alternately connect the anode current collector plates 11 and the cathode current collector plates 12 on a first protruding direction side and a second protruding direction side. The connecting portions 30 include first connecting portions 31 and second connecting portions 32. The first connecting portions 31 connect the anode current collector plates 11 and the cathode current collector plates 12 on the first protruding direction side. The second connecting portions 32 connect the anode current collector plates 11 and the cathode current collector plates 12 on the second protruding direction side.

In the present embodiment, the first protruding direction is a direction facing one side in the lateral direction orthogonal to the up-down direction, and the second protruding direction is a direction facing the other side in the lateral direction. That is to say, the second protruding direction is a direction opposite to the first protruding direction. Note that the relation between the first protruding direction and the second protruding direction is not limited to the above, and the first protruding direction and the second protruding direction may intersect.

The anode current collector plate 11 of the cell 10 that is situated uppermost is connected to an external anode terminal (omitted from illustration), provided outside the housing case 40, by a bus bar (omitted from illustration). The cathode current collector plate 12 of the cell 10 that is situated lowermost is connected to an external cathode terminal (omitted from illustration), provided outside the housing case 40, by a bus bar (omitted from illustration).

The spacers 20 are stacked alternating with the cells 10 in the up-down direction. The spacers 20 are disposed between cells adjacent to each other in the up-down direction. Examples of materials used for the spacer 20 include materials having electrolytic solution withstanding properties, such as urethane, ethylene propylene diene monomer (EPDM) rubber, and so forth. Accordingly, when the electrolytic solution leaks out from the cell 10, corrosion of the spacer by the electrolytic solution can be suppressed.

The spacers 20 have plate-like forms. The spacers 20 each have a first end portion 21 and a second end portion 22. The first end portion 21 is situated on one end side in the lateral direction and the second end portion 22 is situated on the other end side in the lateral direction.

The first end portion 21 protrudes further outward than an end portion 16a of the outer encasement member 16 in the first protruding direction. The first end portion 21 is provided with an extending portion 23 (first extending portion) that extends downward. The extending portion 23 may be provided so as to be parallel to the up-down direction, or may be inclined so as to spread in the first protruding direction as heading downward.

The second end portion 22 protrudes further outward than an end portion 16b of the outer encasement member 16 in the second protruding direction. The second end portion 22 is provided with an extending portion 24 (second extending portion) that extends downward. The extending portion 24 may be provided so as to be parallel to the up-down direction, or may be inclined so as to spread in the second protruding direction as heading downward.

One end portion of the first end portion 21 and the second end portion 22 of each of the spacers 20 faces one of the connecting portions 30 in the lateral direction. The other end portion of the first end portion 21 and the second end portion 22 of each of the spacers 20 does not face any one of the connecting portions 30 in the lateral direction.

More specifically, in the spacer 20 of which the first end portion 21 faces the first connecting portion 31 in the lateral direction on the first protruding direction side, the second end portion 22 does not face the second connecting portion 32 in the lateral direction on the second protruding direction side. Also, in the spacer 20 of which the second end portion 22 faces the second connecting portion 32 in the lateral direction on the second protruding direction side, the first end portion 21 does not face the first connecting portion 31 in the lateral direction on the first protruding direction side.

Note that as viewed from above, the outer shape of the spacer 20 may be larger overall than that of the outer encasement member 16. In this case, as viewed from above, both end portions of the spacer in an orthogonal direction orthogonal to the up-down direction and to the lateral direction may protrude further outward than both ends of the outer encasement member 16 in the orthogonal direction.

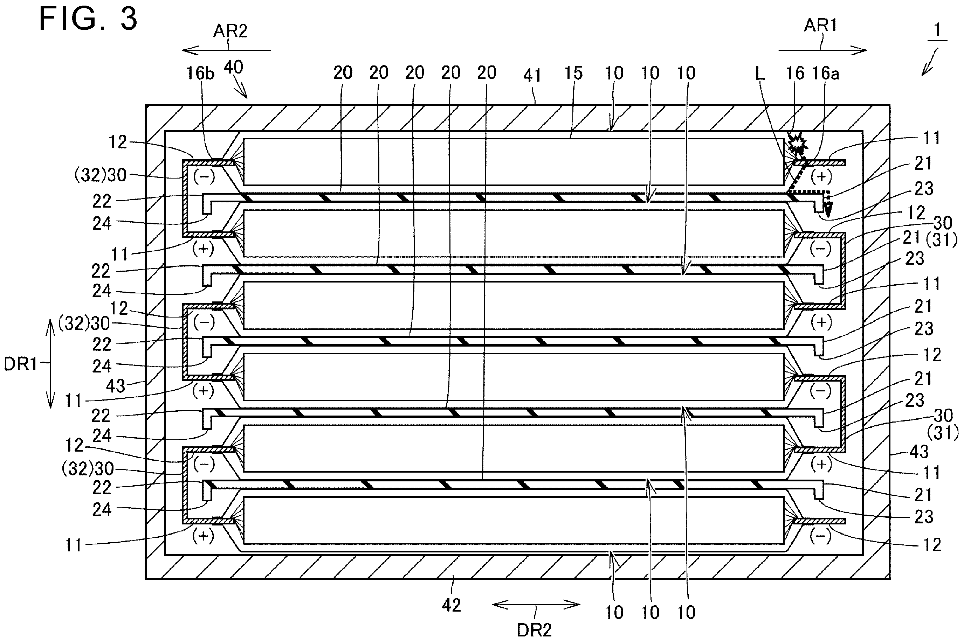

FIG. 3 is a sectional view illustrating an example of a case in which an electrolytic solution is leaking from a cell in the electric power storage device according to the first embodiment.

As illustrated in FIG. 3, when the outer encasement member 16 of the cell 10 that is on the upper side among cells that are adjacent is damaged and an electrolytic solution L leaks out, the electrolytic solution L runs along an outer peripheral face of the outer encasement member 16, and reaches an upper face of the spacer 20 that is adjacent on the lower side. The electrolytic solution L that has reached the upper face of the spacer 20 heads toward the extending portion 23 provided at the first end portion 21 of the spacer, and/or the extending portion 24 provided at the second end portion 22 thereof. The first end portion 21 and the second end portion 22 protrude further outward than the outer encasement member 16 of the cell on the lower side among the cells that are adjacent, and accordingly the electrolytic solution L heading toward the extending portions 23, 24 drips downward from the extending portions 23, 24, without running along the outer peripheral face of the outer encasement member 16 of the cell 10 on the lower side. At this time, the flow path of the leaked electrolytic solution L is cut off. Thus, electrical connection between the anode current collector plate 11 and the cathode current collector plate 12 of cells that are adjacent, at an unintended location (more specifically, at a location where the anode current collector plate 11 and the cathode current collector plate 12 are arrayed in the up-down direction, and are not directly connected by the connecting portion 30) through the electrolytic solution L, can be suppressed. As a result, occurrence of short-circuiting in the electric power storage device 1 can be suppressed.

### Comparative Example

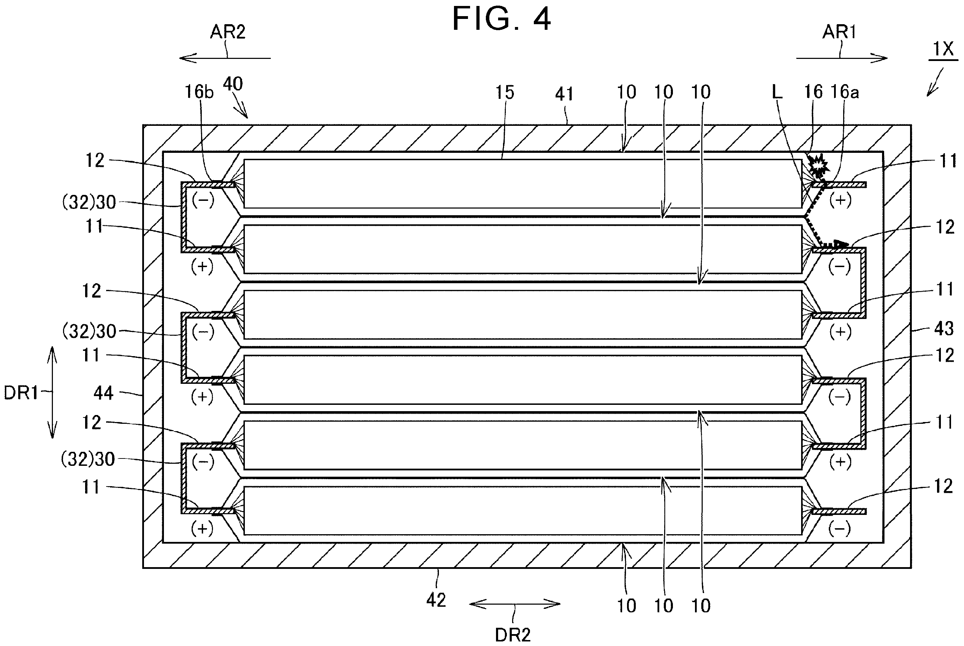

FIG. 4 is a sectional view illustrating an example of a case in which an electrolytic solution is leaking from a cell in an electric power storage device according to a comparative example. The electric power storage device 1X according to the comparative example will be described with reference to FIG. 4.

As illustrated in FIG. 4, the electric power storage device 1X according to the comparative example differs from the electric power storage device 1 according to the first embodiment, in not including the spacers 20. Other configurations are substantially the same.

As illustrated in FIG. 4, when no spacer is provided between the cells 10 adjacent to each other, and the outer encasement member 16 of the cell 10 on the upper side among the cells that are adjacent is damaged and the electrolytic solution L leaks out, the electrolytic solution L moves downward running along the outer peripheral face of the outer encasement member 16 of the cell 10 on the upper side and the outer peripheral face of the outer encasement member 16 of the cell 10 on the lower side. Thus, the anode current collector plate 11 and the cathode current collector plate 12 of cells that are adjacent are electrically connected at an unintended location (more specifically, at a location where the anode current collector plate 11 and the cathode current collector plate 12 are not directly connected by the connecting portion 30 but are arrayed in the up-down direction) through the electrolytic solution L. As a result, short-circuiting may occur in the electric power storage device 1X according to the comparative example.

### Second Embodiment

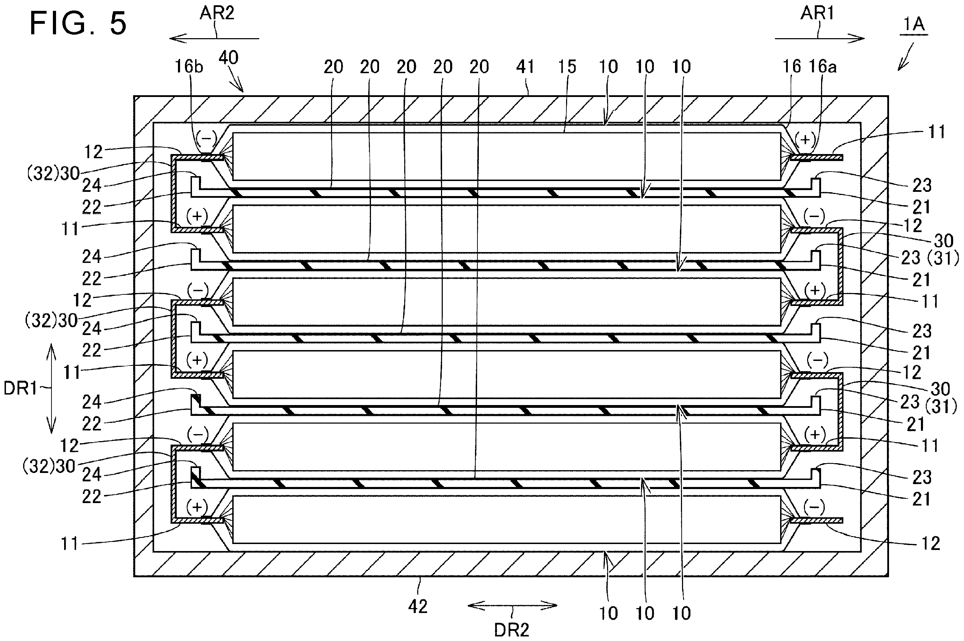

FIG. 5 is a sectional view illustrating an electric power storage device according to a second embodiment. The electric power storage device 1A according to the second embodiment will be described with reference to FIG. 5.

As illustrated in FIG. 5, the electric power storage device 1A according to the second embodiment differs from the electric power storage device 1 according to the first embodiment with respect to the directions in which extending portions 23, 24 extend. Other configurations are substantially the same. In the second embodiment, the extending portions 23, 24 extend upward.

The extending portion 23 may be provided so as to be parallel to the up-down direction, or may be inclined so as to spread in the first protruding direction as heading upward. In the same way, the extending portion 24 may be provided so as to be parallel to the up-down direction, or may be inclined so as to spread in the second protruding direction as heading upward.

In the second embodiment, the extending portions 23, 24 extend upward, and accordingly even in a case in which the electrolytic solution leaks from the cell 10 situated on the upper side of the cells 10 that are adjacent, the electrolytic solution can be retained within the extending portions 23, 24. Accordingly, electrical connection between the anode current collector plate 11 and the cathode current collector plate 12 of cells that are adjacent, at an unintended location (more specifically, at a location not connected by the connecting portion 30) through the electrolytic solution, can be suppressed. As a result, occurrence of short-circuiting in the electric power storage device 1A can be suppressed.

### Third Embodiment

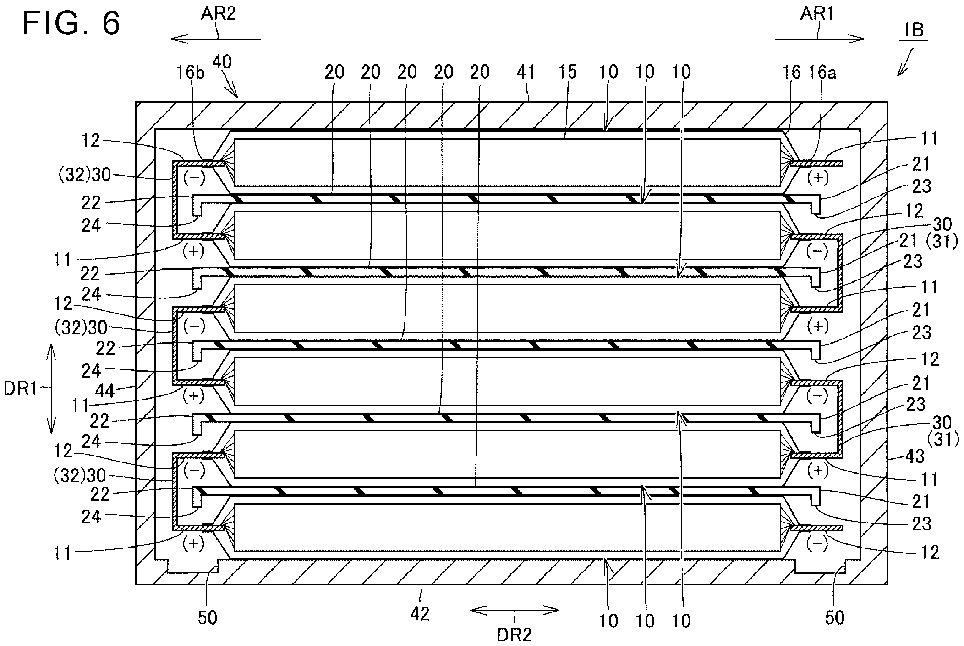

FIG. 6 is a sectional view illustrating an electric power storage device according to a third embodiment. The electric power storage device 1B according to the third embodiment will be described with reference to FIG. 6.

As illustrated in FIG. 6, the electric power storage device 1B according to the third embodiment differs from the electric power storage device 1 according to the first embodiment with respect to being provided with a retention portion 50 in which the electrolytic solution is retained in the bottom portion 42 of the housing case. Other configurations are substantially the same.

For example, the retention portion 50 is formed as a groove portion provided on an inner surface of the bottom portion 42. In addition, instead of the groove portion, a collection portion that absorbs and collects the electrolytic solution may be formed. In this case, the collection portion is fixed to the inner surface of the bottom portion 42.

The configuration as described above also yields substantially the same effects as in the first embodiment. In addition, providing the retention portion 50 enables the electrolytic solution falling to the bottom portion 42 to be suppressed from freely moving.

### Fourth Embodiment

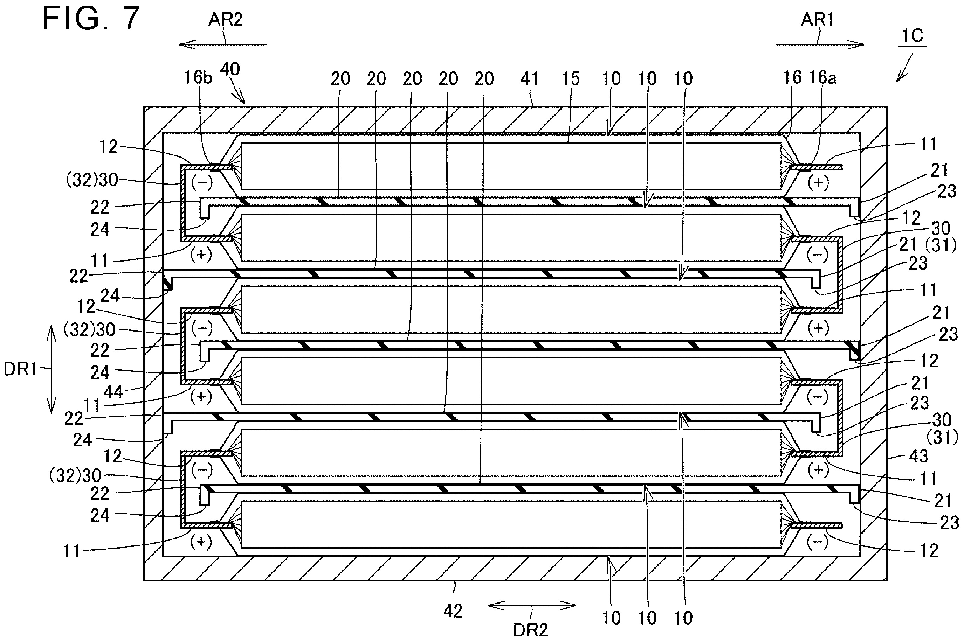

FIG. 7 is a sectional view illustrating an electric power storage device according to a fourth embodiment. The electric power storage device 1C according to the fourth embodiment will be described with reference to FIG. 7.

As illustrated in FIG. 7, the electric power storage device 1C according to the fourth embodiment differs from the electric power storage device 1 according to the first embodiment with respect to the configuration of the spacers 20. Other configurations are substantially the same.

In the fourth embodiment, of the first end portion 21 and the second end portion 22 of each of the spacers 20, the end portion on the side facing none of the connecting portions 30 in the lateral direction protrudes laterally outward from the anode current collector plates 11 and the cathode current collector plates 12 that are arrayed alternating in the up-down direction as viewed from above.

Note that the end portion of each spacer on the side facing none of the connecting portions 30 in the lateral direction may be in contact with the side wall portion 43 or the side wall portion 44 of the housing case 40.

The configuration as described above also yields substantially the same effects as in the first embodiment. In the fourth embodiment, when the electrolytic solution leaks from the cell 10 on the upper side among the cells 10 that are adjacent, the electrolytic solution can be guided further on the outer side from the anode current collector plate 11 and the cathode current collector plate 12 that are arrayed in the up-down direction, at the side on which the anode current collector plate 11 and the cathode current collector plate 12 are not connected by the connecting portion 30 in the up-down direction. Accordingly, electrical connection between the anode current collector plate 11 and the cathode current collector plate 12 of cells that are adjacent, at an unintended location (more specifically, at a location not connected by the connecting portion 30) through the electrolytic solution, can further be suppressed.

### Fifth Embodiment

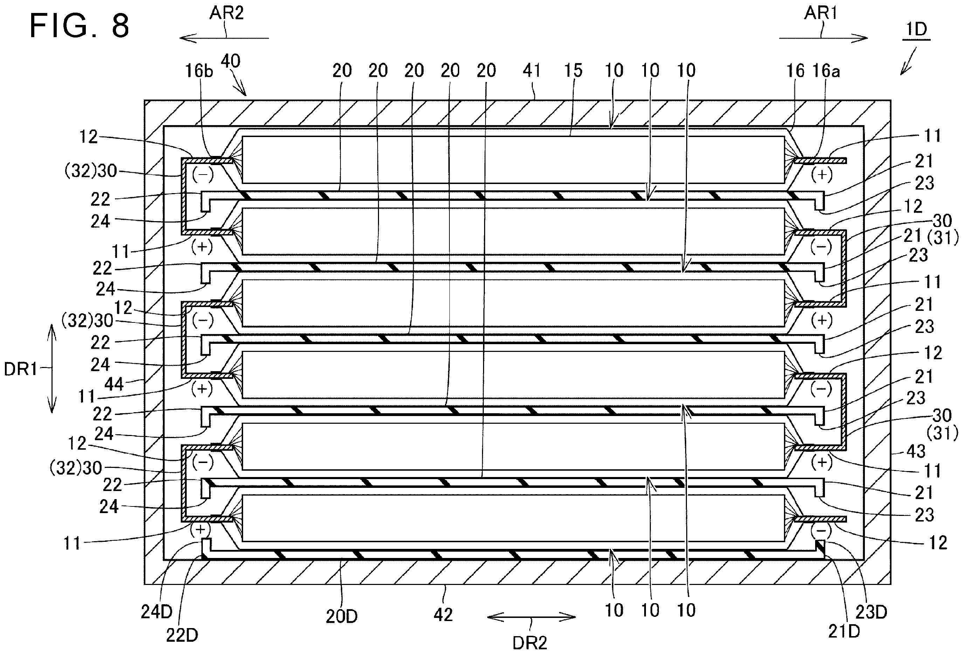

FIG. 8 is a sectional view illustrating an electric power storage device according to a fifth embodiment. The electric power storage device 1D according to the fifth embodiment will be described with reference to FIG. 8.

As illustrated in FIG. 8, the electric power storage device 1D according to the fifth embodiment differs from the electric power storage device 1 according to the first embodiment with respect to the point that a bottom-side spacer 20D is provided between the cell 10 that is situated lowermost and the bottom portion 42 of the housing case 40. Other configurations are substantially the same.

The bottom-side spacer 20D has a first protruding end portion 21D protruding further outward than the end portion of the outer encasement member 16 in the first protruding direction and a second protruding end portion 22D protruding further outward than the end portion of the outer encasement member 16 in the second protruding direction. An extending portion 23D that extends upward is provided on the first protruding end portion 21D, and an extending portion 24D that extends upward is provided on the second protruding end portion 22D.

The bottom-side spacer 20D is obtained by turning the spacer 20 disposed between the cells 10 adjacent to each other upside down. Accordingly, the spacer 20 turned upside down can be used as the bottom-side spacer 20D, and parts can be shared. As a result, the manufacturing costs can be reduced.

The configuration as described above also yields substantially the same effects as in the first embodiment. Further, by disposing the bottom-side spacer 20D having the extending portions 23D, 24D that extend upward, the electrolytic solution falling toward the bottom portion 42 can be blocked by the extending portions 23D, 24D. Also, the height positions of the anode current collector plate 11 and the cathode current collector plate 12 of the cell 10 situated lowermost can be increased by an amount equivalent to the thickness of the bottom-side spacer 20D. Thus, the cell 10 situated lowermost can be suppressed from being affected by the electrolytic solution that has fallen to the bottom portion.

The embodiments disclosed herein are exemplary and not restrictive in all respects. The scope of the invention is indicated by the claims and includes all changes within the meaning and range of equivalency of the claims.

## Claims

1. An electric power storage device (1) comprising:
multiple cells (10) that are arrayed in an up-down direction; and
multiple spacers (20) that are stacked alternating with the cells (10) in the up-down direction, each of the spacers (20) being disposed between cells that are adjacent in the up-down direction,
wherein each of the cells (10) includes an outer encasement member (16) accommodating an electrolytic solution inside, and a first terminal portion (11) and a second terminal portion (12) protruding from the outer encasement member (16),
wherein the first terminal portion (11) and the second terminal portion (12) protrude from the outer encasement member (16) in a first protruding direction and in a second protruding direction that is different from the first protruding direction, respectively, and are disposed arrayed alternating in the up-down direction, as viewed from above, and
wherein each of the spacers (20) includes a first end portion (21) that protrudes further outward than an end portion of the outer encasement member (16) in the first protruding direction, and a second end portion (22) that protrudes further outward than an end portion of the outer encasement member (16) in the second protruding direction, and each of the first end portion (21) and the second end portion (22) is provided with an extending portion (23) heading to one side in the up-down direction.

2. The electric power storage device (1) according to claim 1, wherein the extending portion (23) extends toward a lower side.

3. The electric power storage device (1) according to claim 1, wherein the extending portion (23) extends toward an upward side.

4. The electric power storage device (1) according to any one of claims 1 to 3, wherein the spacers (20) exhibit electrolytic solution withstanding properties.

5. The electric power storage device (1) according to any one of claims 1 to 3, further comprising:
a housing case (40) that includes a bottom portion and houses the cells (10) and the spacers (20); and
a bottom-side spacer (20D) disposed between a cell situated lowermost, and the bottom portion, wherein the bottom-side spacer (20D) includes a first protruding end portion (21D) that protrudes further outward than the end portion of the outer encasement member (16) in the first protruding direction, and a second protruding end portion (22D) that protrudes further outward than the end portion of the outer encasement member (16) in the second protruding direction, and each of the first protruding end portion (21D) and the second protruding end portion (22D) includes an extending portion (23D) heading upward.

6. The electric power storage device (1) according to any one of claims 1 to 3, further comprising a plurality of connecting portions (30), each of the connecting portions electrically connecting the first terminal portion (11) and the second terminal portion (12) of the cells that are adjacent such that the cells (10) are connected in series,
wherein the first protruding direction is a direction facing one side of a lateral direction orthogonal to the up-down direction,
wherein the second protruding direction is a direction facing another side in the lateral direction, and
wherein one end portion of the first end portion (21) and the second end portion (22) of each of the spacers (20) faces one of the connecting portions (30) in the lateral direction, and another end portion of the first end portion (21) and the second end portion (22) of each of the spacers (20) protrudes outward in the lateral direction from the first terminal portion (11) and the second terminal portion (12) that are arrayed alternating in the up-down direction as viewed from above.

7. The electric power storage device (1) according to any one of claims 1 to 3, further comprising a housing case (40) that includes a bottom portion (42) and houses the cells (10) and the spacers (20), wherein the bottom portion (42) is provided with a retention portion (50) that retains the electrolytic solution leaking out from at least one of the cells (10).
